(19) Europäisches Patentamt
European Patent Office
Office européen des brevets

(11) **EP 4 657 032 A1**

(12) **EUROPEAN PATENT APPLICATION**
published in accordance with Art. 153(4) EPC

(43) Date of publication:
**03.12.2025  Bulletin 2025/49**

(21) Application number: 24753504.0

(22) Date of filing: **23.01.2024**

(51) International Patent Classification (IPC):
*G01F 15/06* (2022.01)    *G01F 25/10* (2022.01)
*G01D 11/28* (2006.01)    *G06T 7/60* (2017.01)

(52) Cooperative Patent Classification (CPC):
**G01D 11/28; G01F 15/06; G01F 25/10; G06T 7/60**

(86) International application number:
**PCT/KR2024/001072**

(87) International publication number:
**WO 2024/167172 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  07.02.2023  KR 20230016067

(71) Applicant: **LG CHEM, LTD.**
**Seoul 07336 (KR)**

(72) Inventors:
• **MOON, Jae Young**
  **Daejeon 34122 (KR)**
• **BAE, Sung Hak**
  **Daejeon 34122 (KR)**

(74) Representative: **Hoffmann Eitle**
**Patent- und Rechtsanwälte PartmbB**
**Arabellastraße 30**
**81925 München (DE)**

(54) **DIGITALIZATION SUPPORT APPARATUS FOR ANALOG FLOW METER**

(57)    A digitalization support device for an analog flow meter which digitalizes the analog flow meter by capturing the flow meter and converting the captured information into digital data are described. The digitalization support device for an analog flow meter may include: a capture unit configured to capture a flow meter; a lighting unit installed adjacent to the flow meter and configured to emit light toward the capture unit, with the flow meter interposed therebetween; a light diffusion layer formed on a surface of the flow meter to diffuse the light uniformly; an image processing unit configured to image process information captured by the capture unit and generate a photograph; and a control unit configured to detect a position of a weight in the photograph. An analog flow meter may be digitalized even in a situation where no significant change is made to an existing facility.

**[FIG. 1]**

## Description

FIELD OF THE INVENTION

The present invention is a national phase entry under 35 U.S.C. § 371 of International Application No. PCT/KR2024/001072, filed January 23, 2024, published in Korean, and claims the benefit of priority from Korean Patent Application No. 10-2023-0016067, filed with the Korean Intellectual Property Office on February 7, 2023, the entire contents of which are incorporated herein by reference in their entireties.

The present invention relates to a digitalization support device for an analog flow meter, and more particularly, to a support device, which digitalizes the analog flow meter by capturing the flow meter and converting the captured information into digital data.

BACKGROUND OF THE INVENTION

A flow meter is an instrument that measures the amount (volume or mass) of gas or liquid flowing per unit of time. The flow meter is used as a key device in a lot of process management and used to check the flow rate of gas or liquid flowing into a specific device.

With recent advancements in big data processing technology, factories have been transformed into smart factories. The transformation of factories into smart factories involves a process of digitalization and collection of various data for managing, predicting, and improving an overall process through big data analysis.

Accordingly, attempts have been made to digitalize flow meters, which are used as a key device in process management. However, analog flow meters currently installed in equipment are often installed in environments where it is difficult to install digital flow meters due to fluid temperature, site temperature, work space, and the like, making it difficult to digitalize flow meters. Thus, it is necessary to develop technology that may digitalize flow meters while using analog flow meters installed in existing equipment.

BRIEF SUMMARY OF THE INVENTION

TECHNICAL PROBLEM

The present invention has been invented to resolve the above-mentioned issues and is directed to providing a device, which may digitalize an analog flow meter by installing only a small amount of devices in an analog flow meter installed in existing equipment, without making a significant change to existing equipment.

TECHNICAL SOLUTION

In an embodiment of the present invention, a digitalization support device for an analog flow meter is provided.

The digitalization support device for an analog flow meter according to an embodiment of the present invention may include: a capture unit configured to capture a flow meter; a lighting unit installed adjacent to the flow meter and configured to emit light toward the capture unit, with the flow meter interposed therebetween; a light diffusion layer formed on a surface of the flow meter to diffuse the light uniformly; an image processing unit configured to image process information captured by the capture unit and generate a photograph; and a control unit configured to detect a position of a weight in the photograph.

In the digitalization support device for an analog flow meter according to an embodiment of the present invention, the light diffusion layer may be one of the followings: a diffusion film using a film made by dispersing a light diffusion agent within a film substrate made of a light-transmitting resin; a diffusion film with irregularities formed directly on a surface of a film substrate made of a light-transmitting resin; and a diffusion film with a light diffusion layer formed by applying a composition, in which a light diffusion agent is mixed and dispersed within a light-transmitting resin, to a surface of a film substrate.

In the digitalization support device for an analog flow meter according to an embodiment of the present invention, the light diffusion layer may be positioned on a surface, facing the capture unit, of the flow meter.

In the digitalization support device for an analog flow meter according to an embodiment of the present invention, the light diffusion layer may be formed within a range in which the weight moves in the flow meter.

The digitalization support device for an analog flow meter according to an embodiment of the present invention may further include a correction unit correcting an error, caused by a position of the capture unit, of the captured information.

In the digitalization support device for an analog flow meter according to an embodiment of the present invention, the correction unit may correct the error of the captured information by using a correction value calculated by the following [Equation].

[Equation]

$$\text{Correction value } = \frac{d(h_1 - h_2)}{s}$$

(where d is a thickness of an outer wall of the flow meter, s is a distance between the outer wall of the flow meter and the capture unit, $h_1$ is a height of the weight, and $h_2$ is a height of a camera.)

In the digitalization support device for an analog flow meter according to an embodiment of the present invention, a flow meter device may be an analog flow meter.

## ADVANTAGEOUS EFFECTS

With the present invention, there is an advantage in that an analog flow meter may be digitalized even in a situation where no significant change is made to an existing facility.

The effects which may be achieved from the present disclosure are not limited to the effects mentioned above, and other effects not mentioned above will be clearly appreciated by those skilled in the art to which the present disclosure pertains from the following description.

## BRIEF DESCRIPTION OF THE DRAWINGS

FIG. 1 is a view illustrating a configuration of a digitalization support device for an analog flow meter according to a first embodiment of the present invention.

FIG. 2 is a view illustrating a light diffusion layer of the digitalization support device for an analog flow meter according to the present invention.

FIG. 3 is a view illustrating a control unit of the digitalization support device for an analog flow meter according to an embodiment of the present invention.

FIG. 4 is a view illustrating a correction unit of the digitalization support device for an analog flow meter according to a second embodiment of the present invention.

FIG. 5 is a view illustrating a configuration of the digitalization support device for an analog flow meter according to a third embodiment of the present invention.

[Explanation of symbols]

1: flow meter
2: weight
10: capture unit
20: lighting unit
30: light diffusion layer
40: image processing unit
50: control unit
60: correction unit

## DETAILED DESCRIPTION

Embodiments of the present invention are described in detail below with reference to the accompanying drawings so that those skilled in the art may easily implement the embodiments. However, the present invention may be implemented in many different forms and is not limited to the embodiments described herein. In addition, in order to clearly describe the present invention in the drawings, parts not pertinent to the description have been omitted, and similar reference numerals are given to the similar parts throughout the specification.

The following is a brief description of the terms used herein, which will be followed by a detailed description of the present invention.

The terms used in the present invention have been selected to be as generic as possible in current common usage, in consideration of their functions in the present invention. However, these terms may vary depending on the intent of those skilled in the art or judicial precedents, the emergence of new technologies, and the like. In addition, in certain cases, terms have been arbitrarily selected by the applicant, in which case their meanings will be described in detail in the corresponding description of the invention. Therefore, the terms used herein should be defined based on the meanings of the terms and the overall content of the present invention, rather than merely on the designation of the terms.

When one element is described to "comprise (or include)" one element throughout the specification, this is not intended to preclude any other elements, but rather may further comprise (or include) other elements, unless specifically stated otherwise. In addition, the terms "part," "module," and the like described herein refer to a unit that performs at least one function or operation, and the "part," "module," and the like may be implemented as hardware or software, or a combination of hardware and software. In addition, when one element is described as being "connected (or coupled)" to another element herein, one element may be "directly connected" to another element, and one element may also be connected to another element "with another component interposed therebetween."

The present invention is directed to digitalizing an analog flow meter among flow meters, and is technically characterized by using a flow meter installed in an existing device through more accurately capturing a position of a weight formed in the analog flow meter and image processing the captured information.

The present invention will be described in detail below with reference to the accompanying drawings.

## The first embodiment

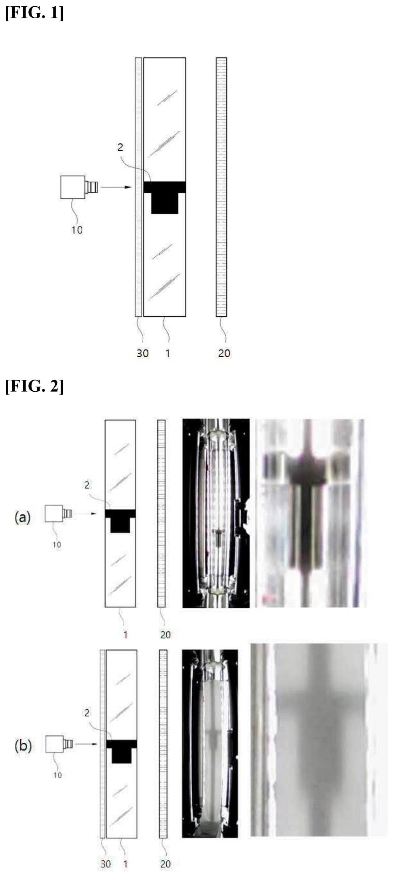

FIG. 1 is a view illustrating a configuration of a digitalization support device for an analog flow meter according to a first embodiment of the present invention.

Referring to FIG. 1, the digitalization support device for an analog flow meter according to a first embodiment of the present invention may be configured to include a weight 2.

A capture unit 10 may be configured to capture a flow meter 1, and may be fixedly installed to face the flow meter 1. According to the embodiment, the capture unit 10 may be implemented as a camera for capturing an instrument panel of the flow meter 1, and may include a plurality of lenses and charge coupled devices (CCDs).

A lighting unit 20 is configured to be installed adjacent to the flow meter 1 and to emit light toward one surface of the flow meter 1, and may be disposed to oppose the capture unit 10 with the flow meter 1 interposed therebetween. According to the embodiment, the lighting unit 20 may be implemented as a light-emitting device, such as an infrared lamp or a light emitting diode (LED), and may be installed adjacent to the flow meter 1 to illuminate the instrument panel in conjunction with an operation of the capture unit 10.

A light diffusion layer 30 is configured to be formed on a surface of the flow meter 1 to diffuse light uniformly, and diffuses the light emitted from the lighting unit 20 to make the overall brightness appear uniform. According to the embodiment, the light diffusion layer 30 may be disposed to surround a partial or full side surface of the flow meter 1, and may be created by using an opaque material.

According to the embodiment, the light diffusion layer 30 may be implemented with any one of the followings: a diffusion film using a film made by dispersing a light diffusion agent within a film substrate made of a light-transmitting resin; a diffusion film with irregularities formed directly on a surface of a film substrate made of a light-transmitting resin; and a diffusion film with a light diffusion layer 30 formed by applying a composition, in which a light diffusion agent is mixed and dispersed within a light-transmitting resin, to a surface of a film substrate.

Referring to FIG. 1, the light diffusion layer 30 may be positioned on a surface, facing the capture unit 10, of the flow meter 1. In this case, there is an advantage in that the original shape or exact position of the weight 2 may be detected by utilizing a shadow generated when the weight 2 inside the flow meter 1 blocks the light emitted from the light unit 20.

In addition, the light diffusion layer 30 is formed within a range in which the weight 2 moves in the flow meter 1, so that the position of the weight 2 may be easily identified regardless of the position of the weight.

An image processing unit 40 is configured to image process information captured by the capture unit 10, and generates a photograph by image processing the captured information.

A control unit 50 is configured to detect a position of the weight 2 in the photograph generated by the image processing unit 40. According to the embodiment, the control unit 50 may detect a position of the weight 2 by recognizing a number displayed on the instrument panel of the flow meter 1 in the photograph.

FIG. 2 is a view illustrating the light diffusion layer 30 of the digitalization support device for an analog flow meter according to the present invention.

FIG. 2(a) is a view illustrating a configuration of a digitalization support device for an analog flow meter in which the light diffusion layer 30 is not formed on a surface of the flow meter 1, and a photograph generated by image processing information captured by the capture unit 10. FIG. 2(b) is a view illustrating a configuration of a digitalization support device for an analog flow meter in which the light diffusion layer 30 is formed on the surface of the flow meter 1, and a photograph generated by image processing information captured by the capture unit 10.

As illustrated in FIG. 2(a), when the light diffusion layer 30 is not formed on the surface of the flow meter 1 and only the capture unit 10 and the lighting unit 20 are utilized to detect a position of the weight 2 inside the flow meter 1, it is difficult to detect the original shape or exact position of the weight 2. This is because the weight 2 inside the flow meter 1 is typically made of a highly glossy material, and thus the light emitted from the lighting unit 20 is reflected by the weight 2.

On the other hand, as illustrated in FIG. 2(b), when the light diffusion layer 30, which makes the overall brightness appear uniform by diffusing the light emitted from the lighting unit 20, is formed on the surface of the flow meter 1, the lighting unit 20 is not directly visible and the light appears with uniform brightness. Thus, the light diffusion layer 30 acts as a background. In addition, the original shape or exact position of the weight 2 may be detected by utilizing a shadow generated when the weight 2 inside the flow meter 1 blocks the light emitted from the lighting unit 20 in the same way as described above.

That is, when the light diffusion layer 30 is formed on the surface of the flow meter 1, it becomes easier to detect the original shape or the position of the weight 2, compared to when only the capture unit 10 and the lighting unit 20 are utilized to detect a position of the weight 2 inside the flow meter 1.

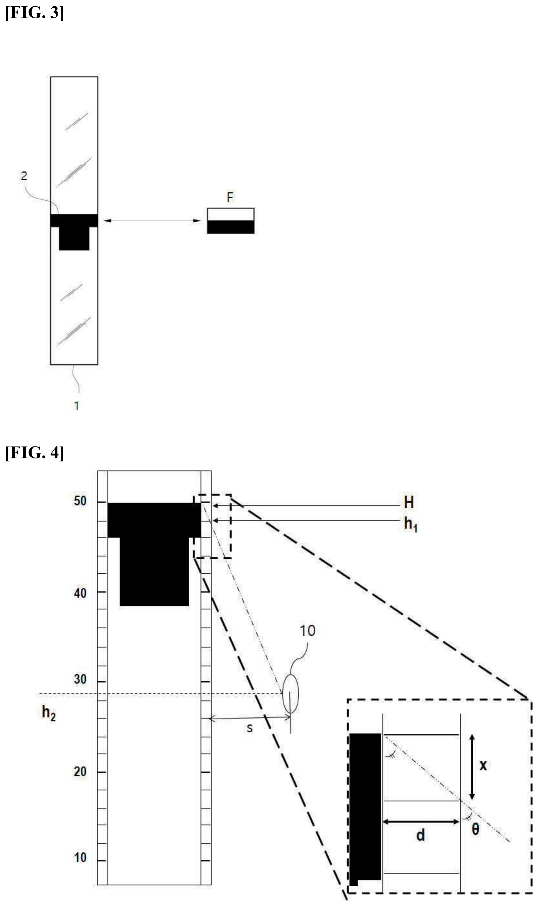

FIG. 3 is a view illustrating the control unit 50 of the digitalization support device for an analog flow meter according to an embodiment of the present invention.

Referring to FIG. 3, the control unit 50 may detect a position of the weight 2 by generating an image F (i.e., a filter), which may indicate a boundary of the weight 2, and finding an area similar to the filter F in the photograph generated by the image processing unit 40. That is because, since the capture unit 10 and the lighting unit 20 are disposed to oppose each other, a portion where the weight 2 is present appears dark and a portion where the weight 2 is not present appears light in the photograph generated by the capture unit 10 and the image processing unit 40.

According to the embodiment, the control unit 50 may be implemented with an algorithm that applies a filter to the photograph generated by the image processing unit 40, and may transmit or receive the detected position of the weight 2 to or from an internal/external device via wired/wireless communication.

DESCRIPTION

**The second embodiment**

A digitalization support device for an analog flow meter according to a second embodiment of the present invention may further include a correction unit 60 in addition to the capture unit 10, the lighting unit 20, the light diffusion layer 30, the image processing unit 40, and the control unit 50.

The capture unit 10, the lighting unit 20, the light diffusion layer 30, the image processing unit 40, and the control unit 50 perform the same operation as the corresponding configurations described in the first embodiment.

For an analog flow meter, in order to accurately detect a position of the weight 2, a number displayed on the instrument panel of the flow meter 1 should be read at the same height as the weight 2. That is, a scale of the flow meter 1 should be read with an upper surface of the weight 2 aligned with the line of sight.

However, for the digitalization support device for an analog flow meter, the capture unit 10 often needs to be fixed in place depending on the internal environment of the equipment where the support device is installed. Thus, an error may occur in the detection of the position of the weight 2.

The correction unit 60 is configured to correct an error caused by the position of the capture unit 10, and calculates a correction value by comprehensively factoring in the position of the capture unit 10, a thickness of an outer wall of the flow meter 1, the position of the weight 2, the position of a camera, and the like.

FIG. 4 is a view illustrating the correction unit 60 of the digitalization support device for an analog flow meter according to the second embodiment of the present invention.

As illustrated in FIG. 4, when the capture unit 10 is fixed in place, a position $h_1$ of the weight 2 detected by the control unit 50 may be different from an actual position H of the same. In this case, the actual position H of the weight 2 may be corrected by adding a correction value x to the detected position $h_1$ of the weight 2, and the correction value x may be calculated by using the thickness of the outer wall of the flow meter 1, the detected position $h_1$ of the weight 2, a position $h_2$ of the capture unit 10, and a distance s between the capture unit 10 and the flow meter 1.

That is, the correction unit 60 according to the second embodiment may correct an error of the captured information by using a correction value calculated by the following [Equation 1].

【Equation 1】

$$\text{Correction value} = \frac{d(h_1 - h_2)}{s}$$

(where D is a thickness of the outer wall of the flow meter, s is a distance between the outer wall of the flow meter and the capture unit, $h_1$ is a height of the weight, and $h_2$ is a height of the camera.)

## The third embodiment

A digitalization support device for an analog flow meter according to a third embodiment of the present invention may include the capture unit 10, the lighting unit 20, the light diffusion layer 30, the image processing unit 40, the control unit 50, and the correction unit 60.

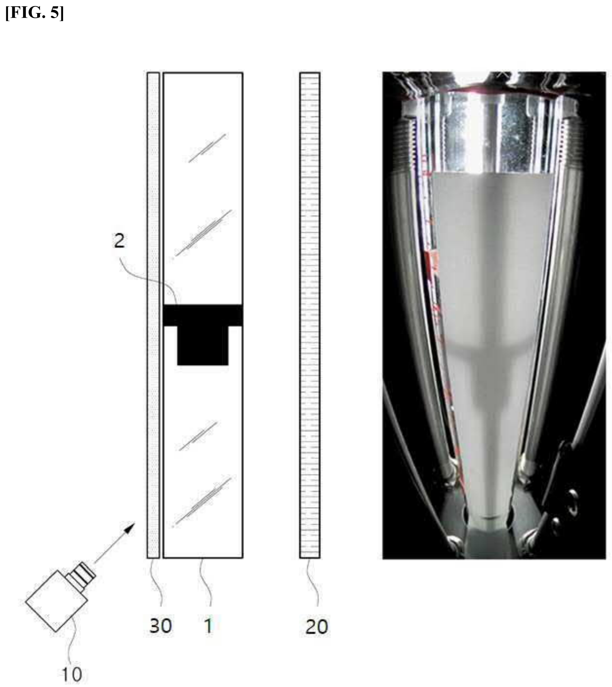

FIG. 5 is a view illustrating a configuration of the digitalization support device for an analog flow meter according to a third embodiment of the present invention.

The capture unit 10, the lighting unit 20, the light diffusion layer 30, the image processing unit 40, the control unit 50, and the correction unit 60 perform the same operation as the corresponding configurations described in the first or second embodiment.

In the second embodiment, the position of the weight 2 included in the photograph generated by the capture unit 10 and the image processing unit 40 may be corrected by using the position of the capture unit 10, the position of the weight 2, the thickness of the outer wall of the flow meter 1, and the like. Thus, there is no restriction on a position where the capture unit 10 is disposed with respect to the relationship between the capture unit 10, the flow meter 1, and the lighting unit 20.

In addition, since the capture unit 10, the light diffusion layer 30, the flow meter 1, and the lighting unit 20 are disposed as illustrated in FIG. 5, there is an advantage in that it is easy to install the digitalization support device for an analog flow meter even if the interior space of the equipment where the support device is installed is narrow.

The above description of the present invention is for illustrative purposes only, and those skilled in the art will appreciate that the present invention may be readily modified into other specific forms without altering the technical spirit or essential features of the present invention. Therefore, it should be understood that the embodiments described above are for illustrative purposes in all respects and non-limiting. For example, each component described as a single form may be implemented in a distributed manner, and similarly, components described as distributed may be implemented in a combined form.

The scope of the present invention should be defined by the following claims, rather than by the detailed description above. In addition, it should be construed that the meaning and scope of the claims and all modifications or variations derived from the equivalent concepts thereof are included in the scope of the present invention.

## Claims

1. A flow meter device comprising:

a capture unit configured to capture a flow meter;
a lighting unit installed adjacent to the flow meter and configured to emit light toward the capture unit, with the flow meter interposed therebetween;

a light diffusion layer formed on a surface of the flow meter to diffuse the light uniformly;

an image processing unit configured to image process information captured by the capture unit and generate a photograph; and

a control unit configured to detect a position of a weight in the photograph.

2. The flow meter device of claim 1, wherein the light diffusion layer is a diffusion film using a film made by dispersing a light diffusion agent within a film substrate made of a light-transmitting resin, a diffusion film with irregularities formed directly on a surface of a film substrate made of a light-transmitting resin, or a diffusion film with a light diffusion layer formed by applying a composition, in which a light diffusion agent is mixed and dispersed within a light-transmitting resin, to a surface of a film substrate.

3. The flow meter device of claim 1, wherein the light diffusion layer is positioned on a surface, facing the capture unit, of the flow meter.

4. The flow meter device of claim 1, wherein the light diffusion layer is formed within a range in which the weight moves in the flow meter.

5. The flow meter device of claim 1, further comprising a correction unit configured for correcting an error, caused by a position of the capture unit, of the captured information.

6. The flow meter device of claim 5, wherein the correction unit is configured to correct the error of the captured information by using a correction value calculated by the following [Equation].

[Equation]

$$\text{Correction value} = \frac{d(h_1 - h_2)}{s}$$

(where d is a thickness of an outer wall of the flow meter, s is a distance between the outer wall of the flow meter and the capture unit, $h_1$ is a height of a position of the weight, and $h_2$ is a height a position of of a camera of the capture unit.)

7. The flow meter device of claim 1, wherein the flow meter device is an analog flow meter.

[FIG. 1]

[FIG. 2]

**[FIG. 3]**

**[FIG. 4]**

[FIG. 5]

## INTERNATIONAL SEARCH REPORT

| | International application No. |
|---|---|
| | **PCT/KR2024/001072** |

| | | | |
|---|---|---|---|
| **A.** | **CLASSIFICATION OF SUBJECT MATTER** | | |
| | G01F 15/06(2006.01)i; G01F 25/10(2022.01)i; G01D 11/28(2006.01)i; G06T 7/60(2006.01)i | | |
| | According to International Patent Classification (IPC) or to both national classification and IPC | | |

| | | | |
|---|---|---|---|
| **B.** | **FIELDS SEARCHED** | | |
| | Minimum documentation searched (classification system followed by classification symbols) | | |
| | G01F 15/06(2006.01); B65D 90/48(2006.01); G01F 1/22(2006.01); G01F 1/24(2006.01); G01F 23/28(2006.01); G01F 23/292(2006.01); G01F 25/00(2006.01) | | |
| | Documentation searched other than minimum documentation to the extent that such documents are included in the fields searched | | |
| | Korean utility models and applications for utility models: IPC as above <br> Japanese utility models and applications for utility models: IPC as above | | |
| | Electronic data base consulted during the international search (name of data base and, where practicable, search terms used) | | |
| | eKOMPASS (KIPO internal) & keywords: 조명(light), 카메라(camera), 보정(calibration), 유량(flow rate), 확산(diffuser), 아날로그(analog), 디지털(digital) | | |

**C. DOCUMENTS CONSIDERED TO BE RELEVANT**

| Category* | Citation of document, with indication, where appropriate, of the relevant passages | Relevant to claim No. |
|---|---|---|
| Y | JP 2012-145437 A (TOKYO KEISO CO., LTD. et al.) 02 August 2012 (2012-08-02) <br> See paragraphs [0014]-[0029] and figure 1. | 1-7 |
| Y | JP 2022-041676 A (SHIBAZAKI SEISAKUSHO:KK) 11 March 2022 (2022-03-11) <br> See paragraphs [0026]-[0037] and figures 1-6. | 1-7 |
| Y | JP 2001-272255 A (RICOH CO., LTD.) 05 October 2001 (2001-10-05) <br> See paragraphs [0005]-[0007] and figures 1-3. | 5-6 |
| A | JP 2007-278998 A (MC LABORATORY INC.) 25 October 2007 (2007-10-25) <br> See paragraphs [0012]-[0019] and figure 1. | 1-7 |
| A | KR 10-2017-0028527 A (D&SHINE CO., LTD.) 14 March 2017 (2017-03-14) <br> See paragraphs [0031]-[0056] and figures 1-4. | 1-7 |

| | |
|---|---|
| ☐ Further documents are listed in the continuation of Box C. | ☑ See patent family annex. |

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 May 2024** | **10 May 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/001072**

| Patent document cited in search report | | | Publication date (day/month/year) | Patent family member(s) | | | Publication date (day/month/year) |
|---|---|---|---|---|---|---|---|
| JP | 2012-145437 | A | 02 August 2012 | None | | | |
| JP | 2022-041676 | A | 11 March 2022 | JP | 6800508 | B1 | 16 December 2020 |
| JP | 2001-272255 | A | 05 October 2001 | None | | | |
| JP | 2007-278998 | A | 25 October 2007 | None | | | |
| KR | 10-2017-0028527 | A | 14 March 2017 | None | | | |

Form PCT/ISA/210 (patent family annex) (July 2022)

**REFERENCES CITED IN THE DESCRIPTION**

**Patent documents cited in the description**

- KR 2024001072 W
- KR 1020230016067